# FASCICULE DE BREVET EUROPEEN

(11) **EP 3 815 397 B1**
(45) Date de publication et mention de la délivrance du brevet: **30.10.2024**
(21) Numéro de dépôt: 19752214.7
(22) Date de dépôt: 28.06.2019
(51) Int. Cl.: H04W 4/02, G01S 5/00, G01S 19/51, H04L 65/1016, H04L 65/1073, H04L 65/1104, H04W 48/10, H04W 64/00

(54) **PROCÉDÉ DE DÉTERMINATION D'UNE LOCALISATION GÉOGRAPHIQUE D'UN POINT D'ACCÈS D'UN RÉSEAU D'ACCÈS LOCAL SANS FIL**
VERFAHREN ZUR BESTIMMUNG EINES GEOGRAFISCHEN STANDORTS EINES ZUGANGSPUNKTES IN EINEM DRAHTLOSEN LOKALEN ZUGANGSNETZ
METHOD FOR DETERMINING A GEOGRAPHICAL LOCATION OF AN ACCESS POINT IN A WIRELESS LOCAL ACCESS NETWORK

(30) Priorité: 29.06.2018 FR 1856021
(43) Date de publication de la demande: 05.05.2021
(73) Titulaire: Orange, 92130 Issy-les-Moulineaux (FR)
(72) Inventeur: DOREE, José, 92326 CHÂTILLON CEDEX (FR); LE ROUZIC, Jean-Claude, 92326 CHÂTILLON CEDEX (FR)
(74) Mandataire: Cabinet Beau de Loménie
(86) Numéro de dépôt international: PCT/FR2019/051603
(87) Numéro de publication internationale: WO 2020/002852

(56) Documents cités:
- US-A1- 2017 195 849
- US-A1- 2017 195 849
- US-A1- 2018 041 879
- US-A1- 2018 041 879

## Description

### Arrière-plan de l'invention

L'invention se rapporte au domaine général des télécommunications.

Elle concerne plus particulièrement la localisation d'utilisateurs enregistrés auprès d'un coeur de réseau IP multimédia.

La localisation d'un utilisateur ou plus particulièrement d'un terminal d'un utilisateur enregistré auprès d'un coeur de réseau IP multimédia est importante, tant au point de vue réglementaire, pour être en mesure par exemple de gérer les appels d'urgence émis par le terminal, que du point de vue des services multiples qui peuvent être offerts par l'opérateur du coeur de réseau et qui s'appuient sur une telle localisation (ex. services personnalisés en fonction de la localisation de l'utilisateur).

L'accès à un coeur de réseau IP multimédia peut se faire, de façon connue, via différentes technologies d'accès. Les réseaux de télécommunications actuels s'appuient de plus en plus pour écouler les communications de leurs utilisateurs sur des technologies d'accès utilisant des réseaux d'accès locaux comme par exemple sur la technologie WiFI (Wireless FIdelity). Ces technologies d'accès permettent d'écouler aussi bien des appels téléphoniques (par exemple via la technologie VoWiFI pour Voice over WiFI) que d'échanger des messages instantanés (de type SMS pour Short Message Service ou MMS pour Multimedia Message Service).

Contrairement aux technologies d'accès s'appuyant sur un réseau cellulaire (ex. réseau à commutation de circuits, 3G, 4G ou 5G), il n'existe pas pour les technologies d'accès s'appuyant sur les réseaux d'accès locaux et notamment pour la technologie WiFI, de cartographie prédéfinie qui permette au coeur de réseau IP multimédia d'associer à une zone desservie via cette technologie d'accès une localisation géographique particulière. Le coeur de réseau IP multimédia a tout au plus accès à un identifiant du réseau d'accès local (par exemple un identifiant de type SSID pour Service Set IDentification) utilisé par le terminal de l'utilisateur pour se connecter au coeur de réseau et à un identifiant matériel (par exemple une adresse MAC (Medium Access Control)) du point d'accès de ce réseau d'accès local auquel le terminal est connecté. Ces données ne fournissent toutefois aucune information de localisation à proprement parler au coeur de réseau IP multimédia pour localiser le terminal de l'utilisateur. En effet, le point d'accès (et le réseau d'accès local s'appuyant sur ce point d'accès) peut être amené à se déplacer, par exemple si l'installation est déménagée par l'utilisateur dans un autre lieu.

Le document US2018/041879 A1 divulgue un dispositif de communication peut transmettre des messages à un réseau IMS via un réseau d'accès radio (RAN) non 3GPP non fiable. Un processus à mettre en oeuvre sur un dispositif de communication peut comprendre la génération d'un message ayant un identifiant d'emplacement (ID) qui indique un emplacement actuel du dispositif de communication, et la transmission du message, via un RAN non 3GPP non fiable, à un noeud dans le réseau IMS. Un processus mis en oeuvre sur un ou plusieurs noeuds du réseau IMS comprend la réception, à partir d'un dispositif de communication et via un RAN non 3GPP non fiable, d'un message ayant un identifiant d'emplacement, et en réponse à la réception du message, l'estimation d'un emplacement actuel du dispositif de communication sur la base de cet identifiant.

Le document US2017/195849 A1 divulgue un dispositif et un procédé pour associer des sessions de service de communication à des emplacements géographiques.

### Objet et résumé de l'invention

L'invention permet notamment de remédier aux inconvénients précités de l'état de la technique en proposant un procédé de détermination d'une localisation géographique d'un point d'accès d'un réseau d'accès local sans fil selon la revendication 1.

Corrélativement, l'invention vise un serveur situé en entrée d'un coeur de réseau IP multimédia selon la revendication 11.

Autrement dit, l'invention propose de corréler, au niveau d'un serveur situé en entrée du coeur de réseau IP multimédia par lequel transitent les messages destinés à être traités par le coeur de réseau (autrement dit au niveau d'un serveur proxy), des informations de localisation insérées par certains terminaux dans leurs messages avec un identifiant matériel des points d'accès empruntés par ces terminaux. Les terminaux en question peuvent être notamment des terminaux équipés d'un module GPS (Global Positioning System) et dont la fonction de localisation est activée. Ils sont configurés de façon connue pour insérer, dans un champ de la signalisation de leurs messages prévu à cet effet, leur position géographique courante sous la forme d'un ensemble de coordonnées GPS. Toutefois l'invention ne se limite pas à l'insertion de coordonnées GPS dans la signalisation par les terminaux comme information de localisation. La signalisation peut également comprendre d'autres types d'informations de localisation insérées par le terminal comme par exemple une adresse civique, etc.

Conformément à l'invention, quand le serveur situé à l'entrée du coeur de réseau IP multimédia détecte la présence d'une telle position géographique insérée par le terminal dans un message qu'il reçoit via un point d'accès d'un réseau d'accès local (ou de manière plus générale d'une information de localisation insérée par le terminal), il extrait cette position géographique et l'associe à l'identifiant matériel du point d'accès lui-même contenu dans la signalisation du message. Lorsque le serveur dispose de plusieurs positions géographiques associées à un même identifiant matériel de point d'accès, extraits de différents messages (provenant ou non de terminaux différents), il détermine une localisation géographique du point d'accès à partir de cette pluralité de positions.

On note qu'aucune limitation n'est attachée à la nature des messages considérés par le serveur pour extraire les informations de localisation des terminaux. Il peut s'agir par exemple d'un message d'enregistrement d'un terminal auprès du coeur de réseau IP multimédia ou d'un message d'initiation d'une communication par le terminal via le coeur de réseau IP multimédia, etc.

L'invention s'appuie donc sur le fait que d'une part, quand bien même les points d'accès peuvent être amenés à être déplacés ponctuellement par leurs usagers, il s'agit d'équipements, qui par leur fonction et par leur usage, ont vocation à être plutôt fixes et qui, d'autre part, desservent des terminaux généralement situés à leur proximité (ces terminaux partagent approximativement la même localisation). En utilisant les positions géographiques remontées par les terminaux empruntant un point d'accès pour accéder au coeur de réseau IP multimédia, il est donc possible d'obtenir une estimation relativement précise de la localisation géographique de ce point d'accès.

Réciproquement, en s'appuyant sur les mêmes hypothèses, il est également possible grâce à l'invention d'obtenir la localisation de terminaux qui sont attachés à un point d'accès donné et qui n'ont pas la faculté de remonter leur position géographique, par exemple parce que leur fonction de localisation est désactivée. L'invention permet donc au coeur de réseau IP multimédia de disposer aisément de la localisation géographique de tous les terminaux enregistrés auprès de lui, qu'ils soient connectés au coeur de réseau IP multimédia par une technologie d'accès cellulaire ou par une technologie d'accès s'appuyant sur un réseau local (par exemple sans fil tel que WiFI). De cette manière, il est possible à l'opérateur du coeur de réseau IP multimédia de proposer des services personnalisés et/ou s'appuyant sur la localisation des utilisateurs.

Le fait de considérer (optionnellement) une pluralité de positions géographiques pour estimer la localisation géographique du point d'accès permet d'améliorer l'estimation réalisée. En outre, elle permet de détecter et de tenir compte d'un éventuel déplacement du point d'accès. Ainsi, dans un mode particulier de réalisation, on détermine la localisation géographique du point d'accès au moyen d'un nombre d'informations de localisation, mémorisées en association avec l'identifiant matériel du point d'accès, supérieur à un seuil déterminé.

Ce seuil peut être déterminé expérimentalement. Il peut en outre tenir compte de la dispersion des informations de localisation remontées par les terminaux (par exemple en vue de détecter comme mentionné précédemment un éventuel déplacement du point d'accès). Les localisations géographiques remontées par les terminaux peuvent être notamment associées à une information temporelle traduisant leur actualité (autrement dit, l'instant auquel elles ont été acquises ou remontées).

Par ailleurs, différentes manières de calculer la localisation géographique du point d'accès à partir des localisations géographiques remontées par les terminaux attachés à ce point d'accès peuvent être envisages.

Ainsi, dans un mode particulier de réalisation, lors de l'étape de détermination, en cas de pluralité d'informations de localisation, la localisation géographique du point d'accès est déterminée en calculant un barycentre de ladite pluralité d'informations de localisation.

En variante, la localisation géographique du point d'accès peut être déterminée à partir de l'information de localisation, mémorisée en association avec l'identifiant matériel du point d'accès, la plus récente ou la plus fréquente (à un faible écart près).

Dans un autre mode de réalisation, la localisation géographique du point d'accès est déterminée en utilisant en outre une information de localisation d'une cellule d'un réseau d'accès cellulaire à laquelle est rattaché un terminal lors d'un réenregistrement du terminal auprès du coeur de réseau IP multimédia, ce réenregistrement faisant suite à un précédent enregistrement du terminal auprès du coeur de réseau IP en utilisant le réseau d'accès local et ledit point d'accès.

Ce mode de réalisation a une application privilégiée dans le contexte de réseaux de télécommunications utilisant le protocole SIP (Session Initiation Protocol), comme par exemple les réseaux s'appuyant sur une architecture IMS (IP Multimedia Subsytem), et qui imposent aux terminaux notamment de se réenregistrer auprès du coeur de réseau lorsqu'ils changent de technologies d'accès (par exemple lorsqu'ils basculent d'un accès WiFI vers un accès cellulaire). Comme mentionné précédemment, il existe pour les technologies d'accès cellulaires une cartographie accessible par le coeur de réseau IP multimédia associant aux identifiants des cellules des réseaux leurs positions géographiques. En utilisant la cellule du réseau cellulaire via laquelle le terminal se réenregistre auprès du coeur de réseau, après avoir basculé vers ce réseau cellulaire d'un réseau d'accès local, il est possible de fiabiliser la connaissance de la position géographique du point d'accès du réseau d'accès local auquel le terminal était précédemment rattaché en faisant l'hypothèse que cette cellule se trouve à proximité du point d'accès en question.

Dans un autre mode de réalisation, la localisation géographique du point d'accès est déterminée en utilisant en outre une information de localisation d'une cellule d'un réseau d'accès cellulaire à laquelle était précédemment rattaché un terminal avant de s'enregistrer ou de se réenregistrer auprès du coeur de réseau IP multimédia en utilisant le réseau d'accès local et ledit point d'accès.

Comme mentionné précédemment, le serveur selon l'invention est situé en entrée du coeur de réseau IP multimédia, afin notamment que ce serveur ait une visibilité sur les réseaux d'accès utilisés par les terminaux. Dans une architecture de type IMS, ce serveur est préférentiellement un serveur P-CSCF (Proxy-Call Session Control Function) du coeur de réseau IP multimédia.

En outre, le fait d'attribuer la fonction de localisation du point d'accès à un serveur situé en entrée du coeur de réseau IP multimédia offre la possibilité d'exploiter cette information au sein même du coeur de réseau IP multimédia.

Selon un autre aspect, l'invention vise également un procédé de gestion d'au moins une base de données d'un coeur de réseau IP multimédia par un serveur situé en entrée du coeur de réseau IP multimédia, ce procédé de gestion comprenant, pour au moins un point d'accès d'au moins un réseau d'accès local permettant d'accéder au coeur de réseau IP multimédia :
- une étape de détermination d'une localisation géographique du point d'accès en utilisant un procédé de détermination selon l'invention ; et
- une étape de mémorisation dans une première base de données du coeur de réseau IP multimédia de ladite localisation géographique du point d'accès en association avec un identifiant matériel du point d'accès.

Corrélativement, l'invention vise également un coeur de réseau IP multimédia comprenant une première base de données et un serveur selon l'invention configuré pour mémoriser dans cette première base de données pour ledit au moins un point d'accès, l'identifiant matériel dudit au moins un point d'accès en association avec la localisation géographique du point d'accès déterminée par le module de détermination du serveur.

Ainsi, les informations de localisation des points d'accès obtenues par le serveur selon l'invention sont avantageusement utilisées pour alimenter une (première) base de données du coeur de réseau IP multimédia, accessible par les autres équipements du coeur de réseau IP multimédia. On peut également envisager de rendre accessible cette première base de données à des applications tierces pour la fourniture de services s'appuyant sur la localisation des utilisateurs du coeur de réseau IP multimédia.

Dans un mode particulier de réalisation, le procédé de gestion comprend en outre, sur réception d'au moins un message en provenance d'un terminal via un point d'accès d'un réseau d'accès local ou via une cellule d'un réseau cellulaire auquel est rattaché le terminal :
- une étape d'extraction de la signalisation du message d'un identifiant matériel du point d'accès ou d'un identifiant de la cellule, et d'au moins une information parmi :
   ∘ un identifiant de communication alloué à un utilisateur du terminal, tel que par exemple un identifiant MSISDN (Mobile Station ISDN Number), aussi couramment désigné par numéro de téléphone, alloué à l'utilisateur ;
   ∘ un identifiant de communication du terminal utilisé sur le coeur de réseau IP multimédia, tel que par exemple un identifiant IMSI (International Mobile Subscriber Identity) stocké dans la carte SIM (Subscriber Identity Module) ou USIM (Universal SIM) du terminal ; et
   ∘ une adresse de joignabilité du terminal, telle que par exemple une adresse IP (Internet Protocol) ou URI (Universal Resource Identifier) ; et
- une étape de mémorisation dans une deuxième base de données du coeur de réseau IP multimédia de ladite au moins une information en association avec l'identifiant matériel du point d'accès ou avec l'identifiant de la cellule.

Corrélativement, le coeur de réseau IP multimédia comprend en outre, dans ce mode de réalisation, une deuxième base de données, et le module d'extraction du serveur est configuré pour extraire de la signalisation d'au moins un message reçu en provenance d'un terminal via un point d'accès d'un réseau d'accès local ou une cellule d'un réseau cellulaire auquel est rattaché le terminal, un identifiant matériel du point d'accès ou un identifiant de la cellule ainsi qu'au moins une information parmi :
- un identifiant de communication alloué à un utilisateur du terminal ;
- un identifiant de communication utilisé par le terminal sur le coeur de réseau IP multimédia ; et
- une adresse de joignabilité du terminal ;
le module de mémorisation du serveur étant configuré pour mémoriser dans ladite deuxième base de données ladite au moins une information en association avec l'identifiant matériel du point d'accès ou l'identifiant de la cellule.

Dans ce mode de réalisation, le serveur selon l'invention exploite les informations présentes dans la signalisation des messages qui transitent par lui pour alimenter une deuxième base de données du coeur de réseau IP Multimédia, ces informations pouvant être ensuite aisément exploitées par les équipements du coeur de réseau ou des applications tierces comme mentionné précédemment pour la première base de données. On note que la première base de données et la deuxième base de données peuvent être regroupées au sein d'une seule base de données.

Dans un mode particulier de réalisation, le procédé de gestion comprend en outre, lorsque le terminal est rattaché à une cellule d'un réseau cellulaire, une étape de mémorisation dans une troisième base de données du coeur de réseau IP multimédia d'une localisation géographique de la cellule en association avec l'identifiant de la cellule.

Corrélativement, le coeur de réseau IP multimédia comprend en outre, dans ce mode de réalisation, une troisième base de données contenant, pour au moins une cellule d'un réseau d'accès cellulaire permettant d'accéder au coeur de réseau IP multimédia, un identifiant de cette cellule en association avec une localisation géographique de cette cellule.

De même la troisième base de données peut être distincte ou confondue avec la première base de données et/ou la deuxième base de données.

Comme mentionné ci-avant, les informations de localisation et autres informations collectées par le serveur et utilisées pour alimenter les première, deuxième et/ou troisième bases de données peuvent être aisément exploitées par les équipements du coeur de réseau multimédia ou par des applications tierces.

Ainsi, dans un mode de réalisation, le procédé de gestion comprend en outre, suite à la réception par le serveur d'un message en provenance d'un terminal via un point d'accès d'un réseau d'accès local permettant d'accéder au coeur de réseau IP multimédia :
- une étape d'extraction de ce message d'un identifiant matériel du point d'accès ;
- une étape de détermination en interrogeant la première base de données, d'une localisation géographique du point d'accès associée à l'identifiant matériel extrait du message ; et
- une étape d'insertion dans la signalisation du message, comme localisation géographique du terminal, de la localisation géographique du point d'accès déterminée lors de l'étape de détermination, avant de transmettre ce message vers un autre équipement du coeur de réseau IP multimédia.

En renseignant la localisation géographique du terminal dans le message relayé vers les autres équipements du coeur de réseau IP multimédia, le serveur selon l'invention permet à ces équipements d'exploiter cette information de localisation y compris pour des terminaux qui n'ont pas la faculté ou qui ne sont pas configurés pour la fournir.

L'invention vise également un système comprenant :
- un coeur de réseau IP multimédia selon l'invention comprenant une première, une deuxième et une troisième base de données telles que décrites précédemment ; et
- une application logicielle apte à fournir un service, ladite application logicielle étant configurée pour, lors de la fourniture dudit service :
   ∘ identifier une localisation d'un utilisateur d'un terminal à partir d'un identifiant de communication alloué audit utilisateur ; et/ou
   ∘ identifier des identifiants de communication alloués à des utilisateurs se trouvant dans une zone géographique déterminée ; et/ou
   ∘ identifier une localisation d'un point d'accès d'un réseau d'accès local permettant d'accéder au coeur de réseau IP multimédia à partir d'un identifiant matériel de ce point d'accès ; et/ou
   ∘ identifier un point d'accès d'un réseau d'accès local situé à proximité d'une zone géographique déterminée ;
en interrogeant ladite première et/ou ladite deuxième et/ou ladite troisième base de données du coeur de réseau IP multimédia.

Le système selon l'invention bénéficie des mêmes avantages cités précédemment que le procédé de gestion et le coeur de réseau IP multimédia.

Dans un mode particulier de réalisation, les différentes étapes du procédé de détermination et/ou du procédé de gestion sont déterminées par des instructions de programmes d'ordinateurs.

En conséquence, l'invention vise aussi un programme d'ordinateur selon la revendication 16 sur un support d'informations, ce programme étant susceptible d'être mis en oeuvre dans un serveur ou plus généralement dans un ordinateur, ce programme comportant des instructions adaptées à la mise en oeuvre des étapes d'un procédé de détermination et/ou du procédé de gestion tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations ou d'enregistrement lisible par un ordinateur, et comportant des instructions d'un programme d'ordinateur tel que mentionné ci-dessus.

Le support d'informations ou d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur.

D'autre part, le support d'informations ou d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations ou d'enregistrement peut être un circuit intégré dans lequel le programme est incorporé, le circuit étant adapté pour exécuter ou pour être utilisé dans l'exécution du procédé en question.

On peut également envisager, dans d'autres modes de réalisation, que le procédé de détermination, le serveur, le procédé de gestion, le coeur de réseau IP multimédia et le système selon l'invention présentent en combinaison tout ou partie des caractéristiques précitées.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente, de façon schématique, un système et un serveur conformes à l'invention, dans un mode particulier de réalisation ;
- la figure 2 illustre un exemple d'architecture matérielle du serveur représenté sur la figure 1, dans un mode particulier de réalisation ; et
- la figure 3 représente les principales étapes d'un procédé de détermination et d'un procédé de gestion selon l'invention telles qu'elles sont mises en oeuvre par le serveur de la figure 1 dans un mode particulier de réalisation.

L'annexe 1 reproduit une partie de la signalisation d'un message SIP REGISTER contenant des informations exploitées par l'invention.

### Description détaillée de l'invention

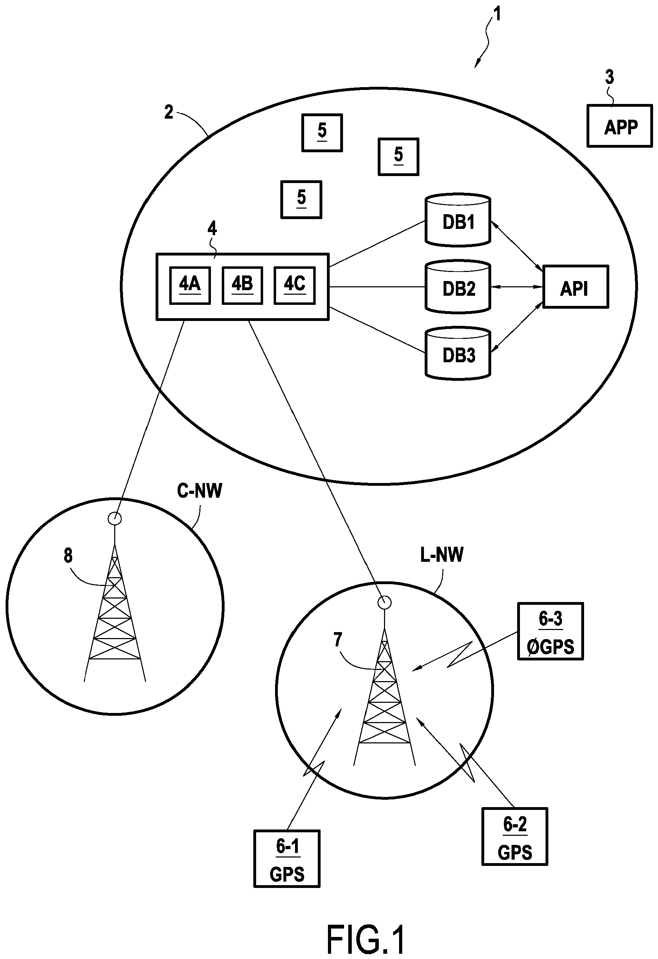

La **figure 1** représente, dans son environnement, un système 1 conforme à l'invention.

Dans l'exemple envisagé à la figure 1, le système 1 comprend un coeur de réseau IP multimédia 2, conforme à l'invention, et une application logicielle 3, apte à fournir un ou plusieurs services à des utilisateurs, ce ou ces services étant ici personnalisés en fonction de la localisation des utilisateurs. A titre illustratif, l'application logicielle 3 peut par exemple fournir un service d'alerte météorologique à ses utilisateurs et notamment informer les utilisateurs se trouvant dans une zone géographique donnée si des phénomènes météorologiques violents ou dangereux (ex. tempête, orage, crue, etc.) doivent se produire dans cette zone géographique. Ceci n'est bien entendu qu'un exemple illustratif et d'autres types d'application peuvent être considérés (alerte incendie, disparition d'enfant, prévention d'attentats, campagne commerciale, etc.). On note que l'application logicielle 3 peut être fournie par l'opérateur du coeur de réseau 2 (elle peut être hébergée par un équipement du coeur de réseau 2) ou par tout autre fournisseur de service.

Conformément à l'invention, le coeur de réseau 2 comprend différents équipements, et notamment un serveur 4 conforme à l'invention, situé à l'entrée du coeur de réseau 2 (du point de vue des usagers du coeur de réseau IP multimédia 2, et plus particulièrement des terminaux des utilisateurs : le serveur 4 est le point d'entrée dans le coeur de réseau 2 des messages envoyés par les terminaux enregistrés auprès du coeur de réseau 2 à destination de ce dernier). Il agit comme un serveur proxy et transmet aux autres équipements du coeur de réseau 2 (référencés de manière générale par 5) les messages qu'il reçoit des terminaux enregistrés auprès du coeur de réseau 2 pour traitement.

Dans le mode de réalisation décrit ici, le coeur de réseau 2 s'appuie sur une architecture IMS et utilise le protocole SIP : le serveur 4 selon l'invention est ici (ou est hébergé par) un serveur proxy P-CSCF auquel sont connectés différents points d'accès et stations de base de divers réseaux d'accès permettant à une pluralité de terminaux d'accéder au coeur de réseau IP multimédia 2. Ces terminaux sont désignés sur la figure 1 et dans la suite de la description de manière générale par la référence 6, ou plus spécifiquement par les références 6-1, 6-2, etc. lorsque l'on s'intéresse à l'un de ces terminaux en particulier. Aucune limitation n'est attachée à la nature de ces terminaux : il peut s'agir de téléphones dits intelligents (ou « smartphones » en anglais), d'ordinateurs portables, de tablettes numériques, etc. Dans le mode de réalisation décrit ici, on suppose que les terminaux 6 sont des terminaux mettant en oeuvre le protocole SIP.

Dans l'exemple considéré à la figure 1, on suppose que les terminaux 6 peuvent accéder au coeur de réseau IP multimédia 2 via un point d'accès 7 d'un réseau d'accès local sans fil L-NW (utilisant la technologie WiFI) ou via une station de base 8 d'un réseau d'accès cellulaire C-NW tel que par exemple un réseau 2G, 3G ou 4G. On note toutefois qu'aucune limitation n'est attachée aux technologies d'accès utilisées respectivement par le réseau d'accès local L-NW et par le réseau d'accès cellulaire C-NW considérés, et d'autres technologies que les technologies WiFI et 2G/3G/4G de même qu'un nombre différent de réseaux d'accès peuvent être envisagés pour accéder au coeur de réseau IP multimédia 2. L'invention s'applique notamment à tout réseau local susceptible d'utiliser une technologie d'accès non-3GPP et en particulier une technologie d'accès non-3GPP non sécurisée telle que par exemple une technologie WiMax.

Les équipements 5 du coeur de réseau 2 sont par exemple un serveur S-CSCF (Serving CSCF), des serveurs d'application, d'autres serveurs proxys SIP, un serveur PCRF (Policy and Charging Rules Function), etc. Aucune limitation n'est attachée à la nature de ces équipements bien connus dans une architecture IMS.

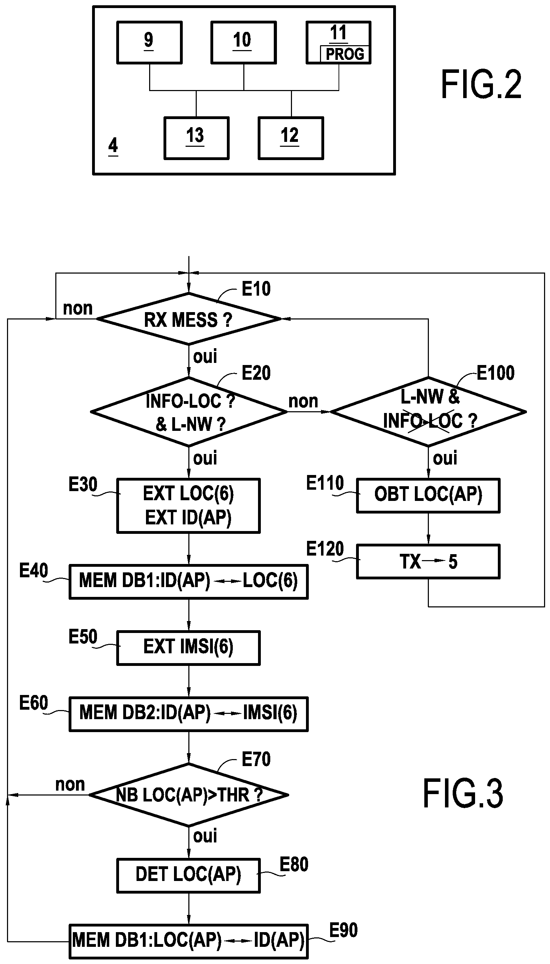

Dans le mode de réalisation décrit ici, le serveur 4 a l'architecture matérielle d'un ordinateur, telle qu'illustrée schématiquement à la **figure 2****.**

Il comprend notamment un processeur 9, une mémoire vive 10, une mémoire morte 11, une mémoire flash non volatile 12, ainsi que des moyens de communication 13 lui permettant de communiquer avec les autres équipements du coeur de réseau 2, mais également avec les différents points d'accès et stations de base des réseaux d'accès permettant d'accéder au coeur de réseau IP multimédia 2 (à savoir dans l'exemple envisagé ici avec le point d'accès 7 et avec la station de base 8).

Ces moyens de communication 13 mettent également en oeuvre ici une interface de communication permettant au serveur 4 d'alimenter et d'interroger diverses bases de données du coeur de réseau 2, et notamment dans le mode de réalisation décrit ici, une première base de données DB1, une deuxième base de données DB2 et une troisième base de données DB3. Cette interface de communication utilise par exemple le protocole applicatif Diameter, connu en soi et couramment utilisé dans les coeurs des réseaux de télécommunications. Dans le mode de réalisation décrit ici, la base de données DB3 contient une cartographie des réseaux cellulaires susceptibles d'être utilisés par les terminaux 6 pour accéder au coeur de réseau 2 : pour chacun de ces réseaux cellulaires (et donc en particulier pour le réseau cellulaire C-NW illustré à la figure 1), la base de données DB3 répertorie l'ensemble des cellules du réseau cellulaire (identifiées chacune au moyen d'un identifiant unique) et leurs localisations géographiques : ainsi, chaque identifiant de cellule est associé dans la base de données DB3 à une position géographique qui correspond par exemple au centre de la cellule ou à la position de la station de base couvrant cette cellule. Une telle base de données est connue en soi, et n'est pas décrite plus en détail ici. Le contenu des bases de données DB1 et DB2 est en revanche détaillé davantage ultérieurement.

La mémoire morte 11 du serveur 4 constitue un support d'enregistrement conforme à l'invention, lisible par le processeur 9 et sur lequel est enregistré un programme d'ordinateur PROG conforme à l'invention : le programme PROG comporte ici des instructions pour l'exécution des étapes du procédé de détermination selon l'invention et pour l'exécution des étapes du procédé de gestion selon l'invention. En variante, des programmes distincts peuvent être envisagés pour les deux procédés.

Plus particulièrement, le programme d'ordinateur PROG définit ici des modules fonctionnels et donc logiciels ici du serveur 4 qui utilisent ou s'appuient sur les éléments matériels 9-13 du serveur 4 mentionnés précédemment. Ces modules comprennent notamment, comme illustré à la figure 1 :
- des modules d'extraction 4A et de mémorisation 4B, activés suite à la réception d'un message par le serveur 4 via un point d'accès d'un réseau d'accès local (comme par exemple le point d'accès 7 du réseau local L-NW), en provenance d'un terminal connecté à ce point d'accès et dont une signalisation contient une information de localisation du terminal insérée par celui-ci. Le module d'extraction 4A est configuré pour extraire de la signalisation du message, un identifiant matériel du point d'accès emprunté par le terminal et l'information de localisation insérée par le terminal. Le module de mémorisation 4B est configuré pour mémoriser les données extraites par le module d'extraction 4A, et plus précisément l'identifiant matériel du point d'accès en association avec l'information de localisation insérée. Ces données peuvent être mémorisées dans une mémoire du serveur 4, comme par exemple dans sa mémoire non volatile 12, ou dans une base de données du coeur de réseau 2, comme par exemple dans la première base de données DB1. Dans le mode de réalisation décrit ici, le module d'extraction 4A et le module de mémorisation 4B sont en outre configurés pour, respectivement, extraire de la signalisation de chaque message reçu en provenance d'un terminal via un point d'accès d'un réseau d'accès local (comme par exemple via le point d'accès 7 du réseau local L-NW) ou une cellule d'un réseau cellulaire (comme par exemple la cellule couverte par la station de base 8 du réseau cellulaire C-NW) auquel est rattaché le terminal, un identifiant matériel du point d'accès ou un identifiant de la cellule ainsi qu'au moins une information parmi :
   ∘ un identifiant de communication alloué à un utilisateur du terminal, tel que par exemple un numéro MSISDN ;
   ∘ un identifiant de communication utilisé par le terminal sur le coeur de réseau IP multimédia, tel que par exemple un identifiant IMSI ;
   ∘ une adresse de joignabilité du terminal telle que par exemple une adresse URI ou une adresse IP ;
   et pour mémoriser dans une base de données du coeur de réseau 2, telle que par exemple dans la deuxième base de données DB2, les informations extraites en association avec l'identifiant matériel du point d'accès ou avec l'identifiant de la cellule ; et
- un module de détermination 4C, configuré pour déterminer une localisation géographique d'un point d'accès à partir d'au moins une information de localisation mémorisée par son module de mémorisation 4B en association avec l'identifiant matériel du point d'accès. Dans le mode de réalisation décrit ici, le serveur 4 est configuré pour mémoriser dans la première base de données DB1 la localisation géographique du point d'accès déterminée par le module de détermination 4C en association avec l'identifiant matériel de ce point d'accès.

Les fonctions de ces modules sont décrites plus en détail maintenant, en référence aux étapes du procédé de localisation et du procédé de gestion selon l'invention.

La **figure 3** représente les principales étapes d'un procédé de détermination et d'un procédé de gestion selon l'invention tel qu'il est mis en oeuvre par le serveur 4, dans un mode particulier de réalisation. On note que conformément à l'invention, le procédé de gestion intègre les étapes du procédé de détermination.

Pour illustrer les différentes étapes du procédé de détermination selon l'invention, on s'intéresse ici aux terminaux 6-1, 6-2 et 6-3 et on suppose que les terminaux 6-1 et 6-2 sont équipés de modules de localisation tels que des modules GPS et que ces modules sont activés, de sorte que les terminaux 6-1 et 6-2 sont en mesure de communiquer au coeur de réseau 2 leurs positions géographiques, par exemple sous formes de coordonnées GPS. En revanche, on suppose que le terminal 6-3 ne dispose pas dans l'exemple envisagé ici d'un tel module de localisation, ou, s'il dispose d'un module de localisation, que sa fonction de localisation est désactivée : le terminal 6-3 ne fournit donc aucune information sur sa localisation géographique quand il communique, en particulier avec le coeur de réseau 2.

Les terminaux 6-1, 6-2 et 6-3 sont par ailleurs supposés être tous connectés dans un premier temps au point d'accès 7 du réseau d'accès local WiFI L-NW.

On suppose maintenant que le terminal 6-1 émet un message d'enregistrement auprès du coeur de réseau 2. Nous allons décrire comment ce message est traité par le serveur 4. Il convient de noter que le serveur 4 applique le même traitement à tous les messages émis par des terminaux qui lui sont rattachés, qu'il s'agisse de messages d'enregistrements, d'initiation de communication, etc.

Dans le mode de réalisation décrit ici, le message d'enregistrement émis par le terminal 6-1 est un message SIP REGISTER adressé au coeur de réseau 2, qui est envoyé via le point d'accès 7 du réseau local L-NW et qui transite par le serveur 4 situé en entrée du coeur de réseau 2. Un exemple de la signalisation de ce message SIP REGISTER est donné en **Annexe 1.** De façon connue, la signalisation du message SIP REGISTER comprend un certain nombre de champs, non décrits en détail ici, et notamment :
- un champ « username » contenant l'élément « 208014449145219@ims.mnc001.mcc208.3gppnetwork.org » désignant l'identifiant IMSI alloué au terminal 6-1 (identifiant de communication alloué au terminal au sens de l'invention) ;
- un champ « P-Access-Network-Info » contenant les éléments « IEEE-802.11 ; i-wlan-node-id=d84710fed998 », ce champ caractérisant l'accès sans fil utilisé par le terminal 6-1 et fournissant un identifiant matériel (id=d84710fed998) du point d'accès emprunté par le terminal c'est-à-dire ici du point d'accès 7. Dans l'exemple envisagé ici, cet identifiant matériel est une adresse MAC identifiant de manière unique le point d'accès 7 ; et
- dans l'information de présence encapsulée « application/pidf », un champ « gp: location-info » contenant diverses informations relatives à la localisation du terminal 6-1 obtenues par celui-ci grâce à son module GPS de localisation (et le cas échéant la fonction de localisation activée au niveau du terminal 6-1 et faisant appel à ce module GPS). Ces informations comprennent ici notamment la position (localisation) géographique du terminal 6-1 exprimée sous forme de coordonnées GPS « <gml :pos> 48.7601868 -3.4733915 </gml :pos> », ainsi que l'adresse civique correspondant à cette localisation GPS :

```
                  « <c1 :civicAddress>
                       <c1 :country> FR </c1 :country>
                       <c1 :A3> Lannion </c1 :A3>
                       <c1 :A6> Rue Blaise Pascal </c1 :A6>
                       <c1 :PC> 22300 </c1 :PC>
                  </c1 :civicAddress> »
```

Ces informations de localisation géographique du terminal 6-1 sont insérées par le terminal lui-même dans le champ « gp: location-info » de la signalisation du message SIP REGISTER, lorsque le terminal dispose de facultés (activées) de localisation. Elles sont décrites plus en détail dans le document RFC 3863 édité par l'IETF (août 2004).

Sur réception du message SIP REGISTER du terminal 6-1 (réponse oui à l'étape test E10), le serveur 4, par l'intermédiaire de son module d'extraction 4A, détermine si le message SIP REGISTER reçu du terminal 6-1 contient une information de localisation du terminal insérée par celui-ci dans la signalisation du message (étape test E20). Il examine à cet effet ici si la signalisation du message contient un champ « gp: location-info ».

Le cas échéant (réponse oui à l'étape test E20), le module d'extraction 4A du serveur 4 extrait du champ <gml :pos> contenu dans le champ « gp: location-info » la localisation géographique du terminal 6-1 donnée par ses coordonnées GPS, notée ici LOC(6-1)= 48.7601868 - 3.4733915 (étape E30).

Le serveur 4 détecte par ailleurs, via l'entremise de son module d'extraction 4A, que le terminal 6-1 a utilisé un réseau d'accès local de type IEEE 802.11 (réseau d'accès WiFI) pour envoyer son message, et qu'il était connecté à cet effet au point d'accès 7 dont l'identifiant matériel (adresse MAC ici) est donné dans le champ « P-Access-Network-Info » du message SIP REGISTER. Le module d'extraction 4A extrait ainsi l'identifiant matériel ID(7)=d84710fed998 du point d'accès 7 de la signalisation du message SIP REGISTER.

Puis le module de mémorisation 4B mémorise, dans la première base de données DB1 ici, en association avec l'identifiant matériel ID(7) du point d'accès 7, la localisation géographique LOC(6-1) renseignée dans le message SIP REGISTER par le terminal 6-1 (étape E40). Dans le mode de réalisation décrit ici, la mise à jour de la base de données DB1 est réalisée par l'intermédiaire d'une interface mettant en oeuvre le protocole Diameter, connue en soi.

Dans une variante de réalisation, le module d'extraction 4A peut en outre extraire de la signalisation du message SIP REGISTER d'autres informations de localisation du terminal 6-1 que ses coordonnées GPS, comme par exemple l'adresse civique correspondant à ces coordonnées, ces informations pouvant être également mémorisées par le module de mémorisation 4B dans la base de données DB1 en association avec l'identifiant matériel ID(7) du point d'accès 7.

On note que les étapes E20 à E40 qui viennent d'être décrites peuvent être mises en oeuvre indifféremment par le serveur 4 sur réception du message SIP REGISTER ou seulement après avoir été informé par le serveur S-CSCF du coeur de réseau IP multimédia 2 de l'authentification positive du terminal 6-1.

Dans le mode de réalisation décrit ici, le serveur 4, par le biais de son module d'extraction 4A, extrait d'autres informations de la signalisation du message SIP REGISTER reçu du terminal 6-1, à savoir par exemple l'identifiant IMSI « 208014449145219 » du terminal 6-1 compris dans le champ « username » (étape E50), et mémorise cet identifiant IMSI en association avec l'identifiant matériel ID(7) du point d'accès 7 dans la base de données DB2 (étape E60). Dans le mode de réalisation décrit ici, la mise à jour de la base de données DB2 est réalisée par l'intermédiaire d'une interface implémentant le protocole Diameter, connue en soi.

En variante, d'autres informations peuvent être extraites par le serveur 4 de la signalisation du message SIP REGISTER et stockées dans la base de données DB2 comme par exemple :
- un identifiant de communication alloué à un utilisateur du terminal, tel que son numéro MSISDN ; ou
- une adresse de joignabilité du terminal, telle qu'une adresse IP ou une URI.

Puis, dans le mode de réalisation décrit ici, le serveur 4 détermine par l'intermédiaire de son module de détermination 4C combien de localisations géographiques sont mémorisées en association avec l'identifiant matériel du point d'accès 7 dans la base de données DB1 (étape test E70). En effet, comme mentionné précédemment, les étapes E10 à E60 sont mises en oeuvre par le serveur 4 pour tous les messages reçus de tous les terminaux qui lui sont rattachés. Autrement dit, pour chaque message reçu via un point d'accès d'un réseau d'accès local, le serveur 4 examine si le message contient une information de localisation insérée par le terminal à l'origine du message et le cas échéant la stocke en association avec l'identifiant matériel du point d'accès dans la base de données DB1. A un instant donné, il peut donc y avoir plusieurs localisations géographiques de terminaux (distincts ou non) associées à un même identifiant matériel d'un point d'accès.

Si le nombre de localisations géographiques enregistrées en association avec l'identifiant matériel du point d'accès 7 (noté NB-LOC(AP) avec AP=7 dans l'exemple considéré ici) est inférieur à un seuil prédéterminé THR (réponse « non » à l'étape test E70), le serveur 4 traite le message SIP REGISTER du terminal 6-1 comme il le fait habituellement, et se replace en attente d'un nouveau message d'un terminal.

Sinon (réponse « oui » à l'étape test E70), le serveur 4 considère qu'il y a suffisamment d'informations stockées dans la base de données DB1 pour déterminer de manière fiable la localisation géographique du point d'accès 7 : plus précisément, le module de détermination 4C du serveur 4 détermine alors à partir de l'ensemble des localisations géographiques des terminaux associées dans la base de données DB1 la localisation géographique du point d'accès 7 (étape E80). Le seuil THR peut être déterminé expérimentalement ou être paramétrable.

A cet effet, dans le mode de réalisation décrit ici, le module de détermination 4C détermine la localisation LOC(AP) (avec AP=7 ici) du point d'accès 7 en calculant le barycentre des informations de localisation stockées en association avec l'identifiant matériel du point d'accès 7. Pour mémoire, ces informations de localisation sont ici des coordonnées GPS.

En variante, d'autres façons de déterminer la localisation géographique du point d'accès 7 à partir des localisations géographiques des terminaux stockées dans la base de données DB1 en association avec l'identifiant matériel du point d'accès 7 peuvent être envisagées. Ainsi, par exemple, la localisation géographique du point d'accès peut être déterminée à partir de la localisation géographique (stockée dans la base de données DB1 en association avec l'identifiant matériel du point d'accès 7) la plus récente ou la plus fréquente (en tenant compte éventuellement d'un faible écart maximal entre les localisations géographiques des terminaux considérées pour déterminer la localisation la plus fréquente).

Suite à la détermination de la localisation géographique du point d'accès 7, le module de mémorisation 4C mémorise cette localisation LOC(7) en association avec l'identifiant matériel du point d'accès 7 dans la base de données DB1 (étape E90). Puis le serveur 4 traite de façon habituelle le message SIP REGISTER émis par le terminal 6-1, et le transmet de manière conventionnelle aux autres équipements du coeur de réseau 2 pour traitement.

Dans le mode de réalisation décrit ici, le module de détermination 4C détermine la localisation LOC(7) du point d'accès 7 en calculant le barycentre de toutes les informations de localisation stockées en association avec l'identifiant matériel du point d'accès 7 dans la base de données DB1. En variante, on peut envisager que le module de détermination 4C ne tienne compte que des informations de localisation mémorisées dans un intervalle de temps prédéterminé, pour ne pas tenir compte notamment d'informations trop anciennes qui pourraient ne plus être pertinentes (les informations de localisation peuvent être à cet effet horodatées lors de leur enregistrement dans la base de données DB1 ; il en est de même de la localisation géographique déterminée pour chaque point d'accès). Dans une autre variante encore, le module de détermination 4C peut évaluer au préalable si certaines localisations géographiques sont aberrantes sur la base de critères prédéterminés, et ne pas tenir compte de ces dernières lors de la détermination de la localisation géographique du point d'accès 7.

Comme mentionné précédemment, les étapes E10 à E90 sont réitérées sur chaque message reçu par le serveur 4 de terminaux connectés à divers réseaux d'accès locaux permettant d'accéder au coeur de réseau IP multimédia 2, et contenant dans leur signalisation, une information de localisation insérée par les terminaux. Lorsque les terminaux utilisent pour envoyer leurs messages à destination du coeur de réseau 2 des réseaux d'accès cellulaires, le serveur 4 peut procéder de façon similaire à ce qu'il fait pour les réseaux locaux lors des étapes E50 et E60 et extraire de la signalisation des messages reçus un identifiant de la cellule à laquelle est rattaché le terminal ainsi que d'autres informations telles qu'un identifiant de communication (ex. MSISDN) alloué à l'utilisateur du terminal, ou un identifiant de communication du terminal utilisé sur le coeur de réseau (ex. IMSI) ou encore une adresse de joignabilité (adresse IP ou URI) du terminal, et stocker ces informations en association avec un identifiant de la cellule dans la deuxième base de données (étape non représentée sur la figure 3).

Si le message reçu est un message de réenregistrement du terminal auprès du coeur de réseau 2, que ce réenregistrement est requis via un réseau d'accès cellulaire et qu'il fait suite à un précédent enregistrement du terminal auprès du coeur de réseau via un réseau d'accès local et un point d'accès donné, le serveur 4 peut en outre mémoriser dans la base de données DB1 en association avec l'identifiant matériel du point d'accès en question, la localisation géographique de la cellule à laquelle est rattaché le terminal lors de son réenregistrement, et tenir compte de cette localisation géographique pour déterminer la localisation géographique du point d'accès en question (ou pour mettre à jour cette localisation géographique). On note que la localisation géographique de la cellule peut être obtenue par le serveur 4 en interrogeant la base de données DB3 à partir de l'identifiant de cellule inclus dans le message de réenregistrement reçu du terminal.

Dans un autre mode de réalisation, le serveur 4 peut déterminer la localisation géographique d'un point d'accès en utilisant en outre une information de localisation d'une cellule d'un réseau d'accès cellulaire à laquelle était précédemment rattaché le terminal avant de s'enregistrer ou de se réenregistrer auprès du coeur de réseau IP multimédia en utilisant le réseau d'accès local et ce point d'accès.

Comme évoqué précédemment, la localisation géographique des points d'accès des réseaux d'accès locaux utilisés pour accéder au coeur de réseau 2 est une information importante qui peut être valorisée de différentes façons.

Nous allons maintenant décrire un exemple d'utilisation de cette information en considérant un message d'enregistrement SIP REGISTER (ou d'initiation d'une communication SIP INVITE) envoyé, via le réseau d'accès local L-NW et le point d'accès 7, par le terminal 6-3 qui ne dispose pas de module de localisation GPS ou de fonction de localisation activée. Ce message SIP REGISTER lorsqu'il est reçu par le serveur 4 ne contient donc aucune information de localisation du terminal 6-3 (réponse « non » à l'étape test E20 et réponse « oui » à l'étape test E100).

Le serveur 4 extrait alors, via son module d'extraction 4A, l'identifiant matériel ID(7) du point d'accès 7 utilisé par le terminal 6-1. Puis il interroge la base de données DB1 en utilisant cet identifiant matériel ID(7) pour déterminer la localisation géographique LOC(7) du point d'accès 7 (étape E110).

Le serveur 4 insère ensuite dans la signalisation du message reçu du terminal 6-1, la localisation géographique LOC(7) du point d'accès 7 en tant que localisation géographique du terminal 6-1, et transfère le message ainsi modifié aux équipements concernés du coeur de réseau multimédia 2 pour traitement (étape E120). Ces équipements disposent ainsi d'une information de localisation géographique du terminal 6-1 fournie par le réseau, et peuvent l'utiliser selon les besoins pour fournir des services reposant sur cette localisation.

Selon un autre exemple d'utilisation de l'information de localisation, cette information est fournie par le réseau que le message reçu par le serveur 4 contienne ou non une information de localisation fournie par le terminal 6-3 (i.e., dans le présent exemple d'utilisation, on ne met pas en oeuvre le test E100). Pour distinguer la localisation éventuellement fournie par le terminal de celle fournie par le réseau, on pourra distinguer cette dernière au moyen, par exemple, d'une valorisation du champ '<gp:method>' à 'networkHeuristic' dans l'information de présence « application/pidf » (mentionnée ci-dessus) utilisée pour transmettre les informations de localisation.

Bien entendu ces exemples ne sont donnés qu'à titre illustratif, et d'autres applications de l'invention peuvent être envisagées. Ainsi par exemple, tout équipement 5 du coeur de réseau 2 ou toute application (via une interface de programmation appropriée ou API pour Application Programmation Interface, par exemple une API REST (Representational State Transfer)), qu'elle soit fournie par l'opérateur du coeur de réseau 2 ou par un autre opérateur, est en mesure en interrogeant les bases de données DB1, DB2 et/ou DB3 :
- d'identifier une localisation d'un utilisateur d'un terminal à partir d'un identifiant de communication alloué audit utilisateur ; et/ou
- d'identifier des identifiants de communication alloués à des utilisateurs se trouvant dans une zone géographique déterminée ; et/ou
- d'identifier une localisation d'un point d'accès d'un réseau d'accès local permettant d'accéder au coeur de réseau IP multimédia à partir d'un identifiant matériel de ce point d'accès ; et/ou
- d'identifier un point d'accès d'un réseau d'accès local situé à proximité d'une zone géographique déterminée ;
et peut proposer divers services adaptés aux données récoltées lors de ces interrogations. De tels services sont déjà proposés aujourd'hui à partir des informations de localisation disponibles dans les réseaux cellulaires et peuvent être étendus, grâce à l'invention, à des réseaux d'accès locaux tels que des réseaux WiFI.

### ANNEXE 1

### Extrait de la signalisation d'un message SIP REGISTER

```
 REGISTER sip:ims.mnc001.mcc208.3gppnetwork.org SIP/2.0
 Via: SIP/2.0/UDP 10.3.0.1:6100;branch=z9hG4bK-524287-1---
 4a581ac5b8117c17;rport;keep;transport= UDP
 Max-Forwards: 70
 Proxy-Require: sec-agree
 Require: sec-agree
 Contact: <sip:208014449145210@10.3.0.1:6100>;+sip.instance="<urn:gsma:imei:35508908-
 102734-0>";q=1.0;+g.3gpp.icsi-ref="urn%3Aurn-7%3A3gpp-service.ims.icsi.mmtel"
 To: <sip:208014449145210@ims.mnc001.mcc208.3gppnetwork.org>
 From: <sip:208014449145210@ims.mnc001.mcc208.3gppnetwork.org>;tag=cf73504d
 Call-ID: DwFkOcyAz2uXqUFQn3mkmQ..@10.3.0.1
 CSeq: 2 REGISTER
 Expires: 600000
 Allow: INVITE, ACK, OPTIONS, CANCEL, BYE, UPDATE, INFO, REFER, NOTIFY, MESSAGE, PRACK
 Content-Type: application/pidf+xml
 Supported: path, sec-agree
 User-Agent: My favorite mobile
 Authorization: Digest
 username="208014449145210@ims.mnc001.mcc208.3gppnetwork.org",realm="ims.mnc01.mcc20
 8.3gppnetwork.org",uri="sip:ims.mnc001.mcc208.3gppnetwork.org",nonce="YIJBdnIMVWs5YUJZQ
 VhWTQn+vbYHNgAA7uahzS2X4t0=",response="2b042e38cccc964e170544ba30749af9",algorithm
 =AKAv1-MD5,nc=00000001,qop=auth,cnonce="90c1ae23b290e6f68d99f8e00104057c"
 Security-Client: ipsec-3gpp;prot=esp;mod=trans;spi-c=48021;spi-s=48022;port-c=6101;port-
 s=6100;alg=hmac-md5-96;ealg=null, ipsec-3gpp;prot=esp;mod=trans;spi-c=48021;spi-
 s=48022;port-c= 610 1 ;port-s=6100 ;alg = hmac-sha-1-96;ealg = null
 Security-Verify: ipsec-3gpp;q=0.1;alg=hmac-sha-1-96;spi-c=1489052182;spi-s=1489052183;port-
 c=32921;port-s=5067, ipsec-3gpp;q=0.2;alg=hmac-md5-96;spi-c=1489052184;spi-
 s= 1489052185; port-c=32921; port-s=5067
 Geolocation-Routing: yes
 Geolocation: <cid:sip:208014449145210@ims.mnc001.mcc208.3gppnetwork.org>
 P-Access-Network-Info: IEEE-802.11;i-wlan-node-id=d84710fed998
 Content-Length: 1451
 Extrait de l'information encapsulée « application/pidf » contenue dans le message SIP REGISTER
 <?xml version="1.0" encoding="UTF-8"?>
 <presence entity="sip:208014449145210@ims.mnc001.mcc208.3gppnetwork.org"
 xmlns="urn:ietf:params:xml:ns:pidf" xmlns:c="urn:ietf:params:xml:ns:pidf:cipid"
 xmlns:caps="urn:ietf:params:xml:ns:pidf:caps"
 xmlns:cI = "u rn: ietf: params:xml: ns: pidf:geopriv10:civicLoc"
 xmlns:con="urn:ietf:params:xml:ns:geopriv:conf"
 xmlns:gml="urn:opengis:specification:gml:schema-xsd:feature:v3.0"
 xmlns:g p= "urn: ietf: params:xml: ns: pidf:geopriv10" xmlns:op="urn:oma:xml:prs:pidf:oma-pres"
 xmlns: pdm = "urn: ietf: params:xml: ns: pidf:data-model"
 xmlns:rpid="urn:ietf:params:xml:ns:pidf:rpid">
 <tuple>
 <status>
 <gp:geopriv>
 <gp:location-info>
 <gs:Circle srsName="urn:ogc:def:crs:EPSG::4326"
 xmlns:gs="http://www.opengis.net/pidflo/1.0">
 <gml:pos>48.7601868 -3.4744915</gml:pos>
 <gs:radius uom="urn:ogc:def:uom:EPSG::9001">18.118</gs:radius>
 </gs:Circle>
 <con:confidence pdf="normal">68</con:confidence>
 <cl:civicAddress>
 <cl:country>FR</cl:country>
 <cl:A3>Lannion</cl:A3>
 <cl:A6>Rue Blaise Pascal</cl:A6>
 <cl:PC>22300</cl:PC>
 </cl:civicAddress>
 </gp:location-info>
 <gp:usage-rules>
 <gp:retransmission-allowed>no</gp:retransmission-allowed>
 <gp:retention-expiry>2017-03-10T10:35:57.00Z</gp:retention-expiry>
 </gp:usage-rules>
 <gp:method>DHCP</gp:method>
 </gp:geopriv>
 </status>
 <timestamp>2017-03-09T10:36:22Z</timestamp>
 </tuple>
 </presence>
```

## Revendications

1. Procédé de détermination d'une localisation géographique d'un point d'accès (7) d'un réseau d'accès local sans fil (L-NW) permettant d'accéder à un coeur de réseau IP multimédia (2), ledit procédé étant destiné à être mis en oeuvre par un serveur (4) situé en entrée du coeur de réseau IP multimédia et comprenant :
- suite à la réception (E10) d'au moins un message en provenance d'au moins un terminal (6-1) via ledit point d'accès contenant une information de localisation du terminal (LOC(6)) insérée par celui-ci dans une signalisation du message :
∘ une étape d'extraction (E30) de ladite signalisation d'un identifiant matériel (ID(AP)) dudit point d'accès ; et
∘ une étape de mémorisation (E40) en association avec l'identifiant matériel dudit point d'accès (ID(AP)) de ladite information de localisation (LOC(6)) insérée dans le message par le terminal (E40) dans une base de données (DB1);
et
- une étape de détermination (E80) d'une localisation géographique (LOC(AP)) du point d'accès à partir (7) d'au moins une dite information de localisation mémorisée en association avec l'identifiant matériel du point d'accès, ladite détermination ne tenant compte de ladite au moins une information de localisation que si elle a été mémorisée dans un intervalle de temps prédéterminé, ladite au moins une information de localisation étant horodatée à cet effet lors de son enregistrement dans la base de données (DB1).

2. Procédé de détermination selon la revendication 1 dans lequel lors de l'étape de détermination, en cas de pluralité d'informations de localisation, la localisation géographique du point d'accès est déterminée (E80) :
- en calculant un barycentre de ladite pluralité d'informations de localisation ; ou
- à partir de l'information de localisation, mémorisée en association avec l'identifiant matériel du point d'accès, la plus récente ; ou
- à partir de l'information de localisation, mémorisée en association avec l'identifiant matériel du point d'accès, la plus fréquente.

3. Procédé de détermination selon la revendication 1 ou 2 dans lequel lors de l'étape de détermination (E80), on détermine la localisation géographique du point d'accès au moyen d'un nombre d'informations de localisation, mémorisées en association avec l'identifiant matériel du point d'accès, supérieur à un seuil déterminé (THR).

4. Procédé de détermination selon l'une quelconque des revendications 1 à 3 dans lequel l'information de localisation (LOC(6)) insérée par le terminal dans le message comprend des coordonnées GPS (Global Positioning System) ou une adresse civique du terminal.

5. Procédé de détermination selon l'une quelconque des revendications 1 à 4 dans lequel la localisation géographique du point d'accès (LOC(AP)) est déterminée en utilisant en outre une information de localisation d'une cellule d'un réseau d'accès cellulaire à laquelle est rattaché un terminal lors d'un réenregistrement du terminal auprès du coeur de réseau IP multimédia, ce réenregistrement faisant suite à un précédent enregistrement du terminal auprès du coeur de réseau IP en utilisant le réseau d'accès local et ledit point d'accès.

6. Procédé de détermination selon l'une quelconque des revendications 1 à 5 dans lequel la localisation géographique du point d'accès est déterminée en utilisant en outre une information de localisation d'une cellule d'un réseau d'accès cellulaire à laquelle était précédemment rattaché un terminal avant de s'enregistrer ou de se réenregistrer auprès du coeur de réseau IP multimédia en utilisant le réseau d'accès local et ledit point d'accès.

7. Procédé de gestion d'au moins une base de données (DB1,DB2,DB3) d'un coeur de réseau IP multimédia (2) par un serveur (4) situé en entrée du coeur de réseau IP multimédia, ledit procédé comprenant, pour au moins un point d'accès d'au moins un réseau d'accès local permettant d'accéder au coeur de réseau IP multimédia :
- une étape de détermination (E80) d'une localisation géographique du point d'accès en utilisant un procédé de détermination selon l'une quelconque des revendications 1 à 6 ; et
- une étape de mémorisation (E90) dans une première base de données du coeur de réseau IP multimédia de ladite localisation géographique du point d'accès en association avec un identifiant matériel du point d'accès.

8. Procédé de gestion selon la revendication 7 comprenant en outre, sur réception d'au moins un message en provenance d'un terminal via un point d'accès d'un réseau d'accès local ou via une cellule d'un réseau cellulaire auquel est rattaché le terminal :
- une étape d'extraction de la signalisation du message d'un identifiant matériel du point d'accès ou d'un identifiant de la cellule, et d'au moins une information parmi :
∘ un identifiant de communication alloué à un utilisateur du terminal ;
∘ un identifiant de communication du terminal utilisé sur le coeur de réseau IP multimédia ; et
∘ une adresse de joignabilité du terminal ; et
- une étape de mémorisation dans une deuxième base de données (DB2) du coeur de réseau IP multimédia de ladite au moins une information en association avec l'identifiant matériel du point d'accès ou avec l'identifiant de la cellule.

9. Procédé de gestion selon la revendication 8 comprenant en outre, lorsque le terminal est rattaché à une cellule d'un réseau cellulaire, une étape de mémorisation dans une troisième base de données (DB3) du coeur de réseau IP multimédia d'une localisation géographique de la cellule en association avec l'identifiant de la cellule.

10. Procédé de gestion selon l'une quelconque des revendications 7 à 9 comprenant en outre, suite à la réception (E10) par le serveur d'un message en provenance d'un terminal via un point d'accès d'un réseau d'accès local permettant d'accéder au coeur de réseau IP multimédia :
- une étape d'extraction de ce message d'un identifiant matériel du point d'accès ;
- une étape de détermination (E110) en interrogeant la première base de données, d'une localisation géographique du point d'accès associée à l'identifiant matériel extrait du message ; et
- une étape d'insertion (E120) dans la signalisation du message, comme localisation géographique du terminal, de la localisation géographique du point d'accès déterminée lors de l'étape de détermination, avant de transmettre ledit message vers un autre équipement du coeur de réseau IP multimédia.

11. Serveur (4) configuré pour être situé en entrée d'un coeur de réseau IP multimédia comprenant des modules, configurés pour être activés pour au moins un point d'accès d'au moins un réseau d'accès local permettant d'accéder au coeur de réseau IP multimédia, lesdits modules comprenant :
- des modules d'extraction (4A) et de mémorisation (4B), configurés pour être activés suite à la réception d'au moins un message via ledit point d'accès, en provenance d'au moins un terminal (6-1) connecté au point d'accès, dont une signalisation contient une information de localisation du terminal (LOC(6)) insérée par celui-ci, ledit module d'extraction étant configuré pour extraire de ladite signalisation un identifiant matériel du point d'accès (ID(AP)) et ledit module de mémorisation étant configuré pour mémoriser en association avec l'identifiant matériel du point d'accès extrait par le module d'extraction, l'information de localisation (LOC(6)) insérée par le terminal dans le message dans une base de données (DB1) ; et
- un module de détermination (4C), configuré pour déterminer une localisation géographique du point d'accès à partir d'au moins une dite information de localisation mémorisée par son module de mémorisation en association avec l'identifiant matériel du point d'accès, ledit module de détermination (4C) étant configuré pour ne tenir compte de ladite au moins une information de localisation que si elle a été mémorisée dans un intervalle de temps prédéterminé, ladite au moins une information de localisation étant horodatée à cet effet lors de son enregistrement dans la base de données (DB1).

12. Coeur de réseau IP multimédia (2) comprenant une première base de données (DB1) et un serveur (4) selon la revendication 11 configuré pour mémoriser dans ladite première base de données pour ledit au moins un point d'accès l'identifiant matériel dudit au moins un point d'accès en association avec la localisation géographique dudit point d'accès déterminée par le module de détermination du serveur.

13. Coeur de réseau IP multimédia (2) selon la revendication 12 comprenant en outre une deuxième base de données (DB2), et dans lequel le module d'extraction du serveur est configuré pour extraire de la signalisation d'au moins un message reçu en provenance d'un terminal via un point d'accès d'un réseau d'accès local ou une cellule d'un réseau cellulaire auquel est rattaché le terminal, un identifiant matériel du point d'accès ou un identifiant de la cellule ainsi qu'au moins une information parmi :
- un identifiant de communication alloué à un utilisateur du terminal ;
- un identifiant de communication utilisé par le terminal sur le coeur de réseau IP multimédia ; et
- une adresse de joignabilité du terminal ;
le module de mémorisation du serveur étant configuré pour mémoriser dans ladite deuxième base de données ladite au moins une information en association avec l'identifiant matériel du point d'accès ou avec l'identifiant de la cellule.

14. Coeur de réseau IP multimédia selon la revendication 12 ou 13 comprenant en outre une troisième base de données (DB3) contenant, pour au moins une cellule d'un réseau d'accès cellulaire permettant d'accéder au coeur de réseau IP multimédia, un identifiant de cette cellule en association avec une localisation géographique de cette cellule.

15. Système (1) comprenant :
- un coeur de réseau IP multimédia (2) selon la revendication 14 ; et
- une application logicielle (3) apte à fournir un service, ladite application logicielle étant configurée pour, lors de la fourniture dudit service :
∘ identifier une localisation d'un utilisateur d'un terminal à partir d'un identifiant de communication alloué audit utilisateur ; et/ou
∘ identifier des identifiants de communication alloués à des utilisateurs se trouvant dans une zone géographique déterminée ; et/ou
∘ identifier une localisation d'un point d'accès d'un réseau d'accès local permettant d'accéder au coeur de réseau IP multimédia à partir d'un identifiant matériel de ce point d'accès ; et/ou
∘ identifier un point d'accès d'un réseau d'accès local situé à proximité d'une zone géographique déterminée ;
en interrogeant ladite première et/ou ladite deuxième et/ou ladite troisième base de données du coeur de réseau IP multimédia.

16. Programme d'ordinateur (PROG) comportant des instructions qui, lorsqu'elles sont exécutées par un ordinateur, conduisent ledit ordinateur à mettre en oeuvre les étapes du procédé de détermination selon l'une quelconque des revendications 1 à 6 ou du procédé de gestion selon l'une quelconque des revendications 7 à 10.

17. Support d'enregistrement (10) lisible par un ordinateur sur lequel est enregistré un programme d'ordinateur selon la revendication 16.

## Patentansprüche

1. Verfahren zur Bestimmung eines geografischen Standorts eines Zugangspunkts (7) eines drahtlosen lokalen Zugangsnetzes (L-NW), das es ermöglicht, auf ein IP-Multimedia-Kernnetz (2) zuzugreifen, wobei das Verfahren dazu bestimmt ist, von einem im Eingang des IP-Multimedia-Kernnetzes angeordneten Server (4) durchgeführt zu werden, und umfasst:
- nach dem Empfangen (E10) mindestens einer Nachricht von mindestens einem Endgerät (6-1) über den Zugangspunkt, die eine Standortinformation (LOC(6)) des Endgeräts enthält, die von diesem in eine Signalisierung der Nachricht eingefügt wurde:
o einen Schritt des Extrahierens (E30) einer Hardware-Kennung (ID(AP)) des Zugangspunkts aus der Signalisierung; und
o einen Schritt des Speicherns (E40) der Standortinformation (LOC(6)), die von dem Endgerät in die Nachricht eingefügt wurde (E40), unter Zuordnung zu der Hardware-Kennung des Zugangspunkts (ID(AP)) in einer Datenbank (DB1);
und
- einen Schritt des Bestimmens (E80) eines geografischen Standorts (LOC(AP)) des Zugangspunkts (7) ausgehend von mindestens einer solchen unter Zuordnung zu der Hardware-Kennung des Zugangspunkts gespeicherten Standortinformation, wobei das Bestimmen die mindestens eine Standortinformation nur berücksichtigt, wenn sie in einem vorbestimmten Zeitintervall gespeichert worden ist, wobei die mindestens eine Standortinformation zu diesem Zweck bei ihrem Registrieren in der Datenbank (DB1) zeitgestempelt wird.

2. Verfahren zur Bestimmung nach Anspruch 1, wobei bei dem Schritt des Bestimmens der geografische Standort des Zugangspunkts im Fall einer Mehrzahl von Standortinformationen bestimmt wird (E80):
- indem ein Baryzentrum der Mehrzahl von Standortinformationen berechnet wird; oder
- ausgehend von der neuesten Standortinformation, die unter Zuordnung zu der Hardware-Kennung des Zugangspunkts gespeichert wurde; oder
- ausgehend von der häufigsten Standortinformation, die unter Zuordnung zu der Hardware-Kennung des Zugangspunkts gespeichert wurde.

3. Verfahren zur Bestimmung nach Anspruch 1 oder 2, wobei bei dem Schritt des Bestimmens (E80) der geografische Standort des Zugangspunkts mittels einer Anzahl von Standortinformationen, die unter Zuordnung zu der Hardware-Kennung des Zugangspunkts gespeichert wurden, bestimmt wird, die größer als ein bestimmter Schwellenwert (THR) ist.

4. Verfahren zur Bestimmung nach einem der Ansprüche 1 bis 3, wobei die Standortinformation (LOC(6)), die von dem Endgerät in die Nachricht eingefügt wird, GPS-Koordinaten (Global Positioning System) oder eine Straßenadresse des Endgeräts umfasst.

5. Verfahren zur Bestimmung nach einem der Ansprüche 1 bis 4, wobei der geografische Standort des Zugangspunkts (LOC(AP)) bestimmt wird, indem ferner eine Standortinformation einer Zelle eines zellularen Zugangsnetzes verwendet wird, mit dem ein Endgerät bei einer Wiederregistrierung des Endgeräts bei dem IP-Multimedia-Kernnetz verbunden ist, wobei diese Wiederregistrierung auf eine vorhergehende Registrierung des Endgeräts bei dem IP-Kernnetz unter Verwendung des lokalen Zugangsnetzes und des Zugangspunkts erfolgt.

6. Verfahren zur Bestimmung nach einem der Ansprüche 1 bis 5, wobei der geografische Standort des Zugangspunkts bestimmt wird, indem ferner eine Standortinformation einer Zelle eines zellularen Zugangsnetzes verwendet wird, mit dem ein Endgerät zuvor verbunden war, bevor es sich bei dem IP-Kernnetz unter Verwendung des lokalen Zugangsnetzes und des Zugangspunkts registriert oder wieder registriert.

7. Verfahren zur Verwaltung mindestens einer Datenbank (DB1,DB2,DB3) eines IP-Multimedia-Kernnetzes (2) durch einen im Eingang des IP-Multimedia-Kernnetzes angeordneten Server (4), wobei das Verfahren, für mindestens einen Zugangspunkt mindestens eines lokalen Zugangsnetzes, das es ermöglicht, auf das IP-Multimedia-Kernnetz zuzugreifen, umfasst:
- einen Schritt des Bestimmens (E80) eines geografischen Standorts des Zugangspunkts unter Verwendung eines Verfahrens zur Bestimmung nach einem der Ansprüche 1 bis 6; und
- einen Schritt des Speicherns (E90) des geografischen Standorts des Zugangspunkts unter Zuordnung zu einer Hardware-Kennung des Zugangspunkts in einer ersten Datenbank des IP-Multimedia-Kernnetzes.

8. Verfahren zur Verwaltung nach Anspruch 7, umfassend ferner, beim Empfangen mindestens einer Nachricht von einem Endgerät über einen Zugangspunkt eines lokalen Zugangsnetzes oder über eine Zelle eines zellularen Netzes, mit dem das Endgerät verbunden ist:
- einen Schritt des Extrahierens, aus der Signalisierung der Nachricht, einer Hardware-Kennung des Zugangspunkts oder einer Kennung der Zelle und mindestens einer Information unter:
o einer Verbindungskennung, die einem Benutzer des Endgeräts zugewiesen ist;
o einer Verbindungskennung des Endgeräts, die in dem IP-Multimedia-Kernnetz verwendet wird; und
o einer Erreichbarkeitsadresse des Endgeräts; und
- einen Schritt des Speicherns der mindestens einen Information unter Zuordnung zu der Hardware-Kennung des Zugangspunkts oder zu der Kennung der Zelle in einer zweiten Datenbank (DB2) des IP-Multimedia-Kernnetzes.

9. Verfahren zur Verwaltung nach Anspruch 8, umfassend ferner, wenn das Endgerät mit einer Zelle eines zellularen Netzes verbunden ist, einen Schritt des Speicherns eines geografischen Standorts der Zelle unter Zuordnung zu der Kennung der Zelle in einer dritten Datenbank (DB3) des IP-Multimedia-Kernnetzes.

10. Verfahren zur Verwaltung nach einem der Ansprüche 7 bis 9, umfassend ferner, nach dem Empfangen (E10), durch den Server, einer Nachricht von einem Endgerät über einen Zugangspunkt eines lokalen Zugangsnetzes, das es ermöglicht, auf das IP-Multimedia-Kernnetz zuzugreifen:
- einen Schritt des Extrahierens einer Hardware-Kennung des Zugangspunkts aus dieser Nachricht;
- einen Schritt des Bestimmens (E110) eines geografischen Standorts des Zugangspunkts, welcher der aus der Nachricht extrahierten Hardware-Kennung zugeordnet ist, indem die erste Datenbank abgefragt wird; und
- einen Schritt des Einfügens (E120) des geografischen Standorts des Zugangspunkts, der bei dem Schritt des Bestimmens bestimmt wurde, als geografischen Standort des Endgeräts in die Signalisierung der Nachricht, bevor die Nachricht an eine andere Einrichtung des IP-Multimedia-Kernnetzes weitergeleitet wird.

11. Server (4), der dazu ausgestaltet ist, im Eingang eines IP-Multimedia-Kernnetzes angeordnet zu sein, umfassend Module, die dazu ausgestaltet sind, für mindestens einen Zugangspunkt mindestens eines lokalen Zugangsnetzes, das es ermöglicht, auf das IP-Multimedia-Netzwerk zuzugreifen, aktiviert zu werden, wobei die Module umfassen:
- Extraktions- (4A) und Speichermodule (4B), die dazu ausgestaltet sind, nach dem Empfangen mindestens einer Nachricht über den Zugangspunkt von mindestens einem mit dem Zugangspunkt verbundenen Endgerät (6-1), deren Signalisierung eine Standortinformation des Endgeräts (LOC(6)) enthält, die von diesem eingefügt wurde, aktiviert zu werden, wobei das Extraktionsmodul dazu ausgestaltet ist, aus der Signalisierung eine Hardware-Kennung des Zugangspunkts (ID(AP)) zu extrahieren, und wobei das Speichermodul dazu ausgestaltet ist, die von dem Endgerät in die Nachricht eingefügte Standortinformation (LOC(6)) unter Zuordnung zu der von dem Extraktionsmodul extrahierten Hardware-Kennung des Zugangspunkts in einer Datenbank (DB1) zu speichern; und
- ein Bestimmungsmodul (4C), das dazu ausgestaltet ist, einen geografischen Standort des Zugangspunkts ausgehend von mindestens einer solchen Standortinformation zu bestimmen, die von seinem Speichermodul unter Zuordnung zu der Hardware-Kennung des Zugangspunkts gespeichert wurde, wobei das Bestimmungsmodul (4C) dazu ausgestaltet ist, die mindestens eine Standortinformation nur zu berücksichtigen, wenn sie in einem vorbestimmten Zeitintervall gespeichert worden ist, wobei die mindestens eine Standortinformation zu diesem Zweck bei ihrem Registrieren in der Datenbank (DB1) zeitgestempelt wird.

12. IP-Multimedia-Kernnetz (2), umfassend eine erste Datenbank (DB1) und einen Server (4) nach Anspruch 11, der dazu ausgestaltet ist, in der ersten Datenbank für den mindestens einen Zugangspunkt die Hardware-Kennung des mindestens einen Zugangspunkts unter Zuordnung zu dem von dem Bestimmungsmodul des Servers bestimmten geografischen Standort des Zugangspunkts zu speichern.

13. IP-Multimedia-Kernnetz (2) nach Anspruch 12, das ferner eine zweite Datenbank (DB2) umfasst und bei dem das Extraktionsmodul des Servers dazu ausgestaltet ist, aus der Signalisierung mindestens einer Nachricht, die von einem Endgerät über einen Zugangspunkt eines lokalen Zugangsnetzes oder eine Zelle eines zellularen Netzes, mit dem das Endgerät verbunden ist, empfangen wird, eine Hardware-Kennung des Zugangspunkts oder eine Kennung der Zelle zu extrahieren sowie mindestens eine Information unter:
- einer Verbindungskennung, die einem Benutzer des Endgeräts zugewiesen ist;
- einer Verbindungskennung, die von dem Endgerät in dem IP-Multimedia-Kernnetz verwendet wird; und
- einer Erreichbarkeitsadresse des Endgeräts;
wobei das Speichermodul des Servers dazu ausgestaltet ist, die mindestens eine Information unter Zuordnung zu der Hardware-Kennung des Zugangspunkts oder zu der Kennung der Zelle in der zweiten Datenbank zu speichern.

14. IP-Multimedia-Kernnetz nach Anspruch 12 oder 13, umfassend ferner eine dritte Datenbank (DB3), die für mindestens eine Zelle eines zellularen Zugangsnetzes, das den Zugriff auf das IP-Multimedia-Netz ermöglicht, eine Kennung dieser Zelle unter Zuordnung zu einem geografischen Standort dieser Zelle enthält.

15. System (1), umfassend:
- ein IP-Multimedia-Kernnetz (2) nach Anspruch 14; und
- eine Software-Anwendung (3), die geeignet ist, einen Dienst bereitzustellen, wobei die Software-Anwendung dazu ausgestaltet ist, bei der Bereitstellung des Dienstes:
o einen Standort eines Benutzers eines Endgeräts ausgehend von einer dem Benutzer zugewiesenen Verbindungskennung zu identifizieren; und/oder
o Verbindungskennungen zu identifizieren, die Benutzern zugewiesen sind, die sich in einem bestimmten geografischen Bereich befinden; und/oder
o einen Standort eines Zugangspunkts eines lokalen Zugangsnetzes, das es ermöglicht, auf ein IP-Multimedia-Kernnetz zuzugreifen, ausgehend von einer Hardware-Kennung dieses Zugangspunkts zu identifizieren; und/oder
o einen Zugangspunkt eines lokalen Zugangsnetzes zu identifizieren, das in der Nähe eines bestimmten geografischen Bereichs gelegen ist;
indem die erste und/oder die zweite und/oder die dritte Datenbank des IP-Multimedia-Kernnetzes abgefragt wird.

16. Computerprogramm (PROG), das Anweisungen enthält, die bei der Ausführung durch einen Computer den Computer veranlassen, die Schritte des Verfahrens nach einem der Ansprüche 1 bis 6 oder des Verfahren zur Verwaltung nach einem der Ansprüche 7 bis 10 auszuführen.

17. Computerlesbares Speichermedium (10), auf dem ein Computerprogramm nach Anspruch 16 gespeichert ist.

## Claims

1. Method for determining a geographical location of an access point (7) of a wireless local access network (L-NW) which makes it possible to access an IP multimedia core network (2), said method being intended to be implemented by a server (4) situated at the input of the IP multimedia core network and comprising:
- after at least one message is received (E10) from at least one terminal (6-1) via said access point containing an item (LOC(6)) of information on the location of the terminal inserted by the latter into a signalling of the message:
∘ a step (E30) of extracting, from said signalling, a hardware identifier (ID(AP)) of said access point; and
∘ a step (E40) of storing, in association with the hardware identifier (ID(AP)) of said access point, said item (LOC(6)) of location information inserted (E40) into the message by the terminal in a database (DB1); and
- a step (E80) of determining a geographical location (LOC(AP)) of the access point (7) on the basis of at least one said item of location information stored in association with the hardware identifier of the access point, said determination taking account of said at least one item of location information only if it was stored within a predetermined time interval, said at least one item of location information being timestamped for this purpose when it is stored in the database (DB1).

2. Determination method according to Claim 1, wherein, during the determination step, in the event of a plurality of items of location information, the geographical location of the access point is determined (E80) :
- by calculating a barycentre of said plurality of items of location information; or
- on the basis of the most recent item of location information stored in association with the hardware identifier of the access point; or
- on the basis of the most frequent item of location information stored in association with the hardware identifier of the access point.

3. Determination method according to Claim 1 or 2, wherein, during the determination step (E80), the geographical location of the access point is determined by means of a number of items of location information, stored in association with the hardware identifier of the access point, which is above a determined threshold (THR) .

4. Determination method according to any one of Claims 1 to 3, wherein the item (LOC(6)) of location information inserted by the terminal into the message comprises GPS (Global Positioning System) coordinates or a street address of the terminal.

5. Determination method according to any one of Claims 1 to 4, wherein the geographical location (LOC(AP)) of the access point is determined by furthermore using an item of information on the location of a cell of a cellular access network to which a terminal is attached when the terminal is re-registered with the IP multimedia core network, this re-registration following a previous registration of the terminal with the IP core network using the local access network and said access point.

6. Determination method according to any one of Claims 1 to 5, wherein the geographical location of the access point is determined by furthermore using an item of information on the location of a cell of a cellular access network to which a terminal was previously attached before being registered or re-registered with the IP multimedia core network using the local access network and said access point.

7. Method for managing at least one database (DB1, DB2, DB3) of an IP multimedia core network (2) by means of a server (4) situated at the input of the IP multimedia core network, said method comprising, for at least one access point of at least one local access network which makes it possible to access the IP multimedia core network:
- a step (E80) of determining a geographical location of the access point by using a determination method according to any one of Claims 1 to 6; and
- a step (E90) of storing, in a first database of the IP multimedia core network, said geographical location of the access point in association with a hardware identifier of the access point.

8. Management method according to Claim 7, further comprising, when at least one message is received from a terminal via an access point of a local access network or via a cell of a cellular network to which the terminal is attached:
- a step of extracting, from the signalling of the message, a hardware identifier of the access point or an identifier of the cell, and at least one item of information from among:
∘ a communication identifier allocated to a user of the terminal;
∘ a communication identifier of the terminal used on the IP multimedia core network; and
∘ a reachability address of the terminal; and
- a step of storing, in a second database (DB2) of the IP multimedia core network, said at least one item of information in association with the hardware identifier of the access point or with the identifier of the cell.

9. Management method according to Claim 8, further comprising, when the terminal is attached to a cell of a cellular network, a step of storing, in a third database (DB3) of the IP multimedia core network, a geographical location of the cell in association with the identifier of the cell.

10. Management method according to any one of Claims 7 to 9, further comprising, after a message is received (E10) by the server from a terminal via an access point of a local access network which makes it possible to access the IP multimedia core network:
- a step of extracting, from this message, a hardware identifier of the access point;
- a step (E110) of determining, by querying the first database, a geographical location of the access point associated with the hardware identifier extracted from the message; and
- a step (E120) of inserting, into the signalling of the message, as the geographical location of the terminal, the geographical location of the access point determined during the determination step, before transmitting said message to another equipment of the IP multimedia core network.

11. Server (4) configured to be situated at the input of an IP multimedia core network comprising modules, which are configured to be activated for at least one access point of at least one local access network which makes it possible to access the IP multimedia core network, said modules comprising:
- an extraction module (4A) and a storage module (4B), which are configured to be activated after at least one message is received via said access point, from at least one terminal (6-1) connected to the access point, a signalling of which contains an item (LOC(6)) of information on the location of the terminal inserted by the latter, said extraction module being configured to extract, from said signalling, a hardware identifier (ID(AP)) of the access point and said storage module being configured to store, in association with the hardware identifier of the access point extracted by the extraction module, the item (LOC(6)) of location information inserted by the terminal into the message in a database (DB1); and
- a determination module (4C), configured to determine a geographical location of the access point on the basis of at least one said item of location information stored by its storage module in association with the hardware identifier of the access point, said determination module (4C) being configured to take account of said at least one item of location information only if it was stored within a predetermined time interval, said at least one item of location information being timestamped for this purpose when it is stored in the database (DB1).

12. IP multimedia core network (2) comprising a first database (DB1) and a server (4) according to Claim 11, which is configured to store, in said first database, for said at least one access point, the hardware identifier of said at least one access point in association with the geographical location of said access point determined by the determination module of the server.

13. IP multimedia core network (2) according to Claim 12, further comprising a second database (DB2), and wherein the extraction module of the server is configured to extract, from the signalling of at least one message received from a terminal via an access point of a local access network or a cell of a cellular network to which the terminal is attached, a hardware identifier of the access point or an identifier of the cell as well as at least one item of information from among:
- a communication identifier allocated to a user of the terminal;
- a communication identifier used by the terminal on the IP multimedia core network; and
- a reachability address of the terminal;
the storage module of the server being configured to store, in said second database, said at least one item of information in association with the hardware identifier of the access point or with the identifier of the cell.

14. IP multimedia core network according to Claim 12 or 13, further comprising a third database (DB3) containing, for at least one cell of a cellular access network which makes it possible to access the IP multimedia core network, an identifier of this cell in association with a geographical location of this cell.

15. System (1) comprising:
- an IP multimedia core network (2) according to Claim 14; and
- a software application (3) which is able to provide a service, said software application being configured to, when said service is provided:
∘ identify a location of a user of a terminal on the basis of a communication identifier allocated to said user; and/or
∘ identify communication identifiers allocated to users in a determined geographical area; and/or
∘ identify a location of an access point of a local access network which makes it possible to access the IP multimedia core network on the basis of a hardware identifier of this access point; and/or
∘ identify an access point of a local access network situated close to a determined geographical area;
by querying said first and/or said second and/or said third database of the IP multimedia core network.

16. Computer program (PROG) comprising instructions which, when they are executed by a computer, lead said computer to implement the steps of the determination method according to any one of Claims 1 to 6 or of the management method according to any one of Claims 7 to 10.

17. Computer-readable storage medium (10) on which a computer program according to Claim 16 is stored.
